# EUROPEAN PATENT APPLICATION

(11) **EP 3 091 713 A1**
(43) Date of publication of application: **09.11.2016**
(21) Application number: 14880299.4
(22) Date of filing: 23.01.2014
(51) Int. Cl.: H04L 29/12

(54) **METHOD, SWITCH, AND CONTROLLER FOR IMPLEMENTING ARP**

(71) Applicant: Huawei Technologies Co., Ltd., Longgang District Shenzhen, Guangdong 518129 (CN)
(72) Inventor: CAI, Hui, Shenzhen Guangdong 518129 (CN); TAN, Shiyong, Shenzhen Guangdong 518129 (CN); NI, Hui, Shenzhen Guangdong 518129 (CN)
(74) Representative: Thun, Clemens
(86) International application number: PCT/CN2014/071216
(87) International publication number: WO 2015/109478

(57) **Abstract**

An ARP implementation method, a switch device, and a control device are disclosed. The method includes: receiving, by a switch device, an ARP packet; sending, by the switch device, an information reporting message including the ARP packet to a control device; and implementing, by the switch device, the ARP according to a MAC address included in an information delivery message sent by the control device, where the information delivery message is a message sent by the control device according to the information reporting message. By means of embodiments of the present invention, although a switch device in an SDN network does not have a capability of supporting the ARP protocol, the switch device can report an ARP packet to a control device and implement ARP interaction with an external device with the assistance of the control device, thereby improving a data transmission capability of the SDN network.

## Description

### TECHNICAL FIELD

The present invention relates to the field of network communications technologies, and in particular, to an Address Resolution Protocol (Address Resolution Protocol, ARP) implementation method, a switch device, and a control device.

### BACKGROUND

With the expansion of the scale of the Internet, a software defined network (Software Defined Network, SDN) emerges as required. An SDN network uses the OpenFlow (OpenFlow) protocol, and supports an open interface and multi-control switching. The SDN network separates a control plane of a network device from a data forwarding plane, so that network traffic can be controlled flexibly. A function of the control plane is implemented by a control device (Controller), which is mainly responsible for delivering a traffic forwarding policy; a function of the data forwarding plane is implemented by a switch device (Switch, SW for short), which is mainly used to receive a flow table delivered by the control device and perform an operation on a data packet according to the flow table. Generally, in an SDN network, a control device is connected to each switch device, and switch devices are interconnected to implement forwarding of a data packet.

In an SDN network, a switch device transmits an Ethernet data packet based on a Media Access Control (Media Access Control, MAC) address. Because the switch device does not have a layer 3 capability, after receiving an Internet Protocol (Internet Protocol, IP) data packet, the switch device cannot recognize a destination MAC address corresponding to a destination IP address of the IP data packet, and therefore cannot complete transmission of the IP data packet. In the prior art, a layer 2 device can establish an ARP list by using the Address Resolution Protocol (Address Resolution Protocol, ARP) so as to determine a correspondence between an IP address and a MAC address. However, because a switch device in an SDN network does not have a capability of supporting the ARP protocol, it is difficult for the switch device to implement ARP interaction with another external device, which reduces a data transmission capability of the SDN network.

### SUMMARY

Embodiments of the present invention provide an ARP implementation method, a switch device, and a control device, to solve a problem in the prior art that a data transmission capability of an SDN network is reduced because it is difficult for a switch device in the SDN network to implement ARP interaction with an external device.

To solve the foregoing technical problem, the embodiments of the present invention disclose the following technical solutions:

According to a first aspect, an Address Resolution Protocol ARP implementation method is provided, where the method includes:
receiving, by a switch device, an ARP packet;
sending, by the switch device, an information reporting message including the ARP packet to a control device; and
implementing, by the switch device, the ARP according to a MAC address included in an information delivery message sent by the control device, where the information delivery message is a message sent by the control device according to the information reporting message.

With reference to the first aspect, in a first optional implementation manner of the first aspect, before the receiving, by a switch device, an ARP packet, the method further includes:
receiving, by the switch device, a first flow entry delivered by the control device and used to forward an ARP packet, where a match item of the first flow entry is that a packet type is ARP packet, and an action set of the first flow entry is forwarding an ARP packet to the control device; and
saving, by the switch device, the first flow entry; and
the sending, by the switch device, an information reporting message including the ARP packet to a control device is specifically: sending, by the switch device, the information reporting message including the ARP packet to the control device according to the first flow entry.

With reference to the first optional implementation manner of the first aspect, in a second optional implementation manner of the first aspect, the receiving, by a switch device, an ARP packet is specifically:
receiving, by the switch device, an ARP request packet, where the ARP request packet includes an Internet Protocol IP address of the switch device;
the sending, by the switch device, the information reporting message including the ARP packet to the control device according to the first flow entry includes:
   matching, by the switch device, a packet type of the ARP request packet with the match item of the first flow entry, to obtain the action set of the first flow entry;
   encapsulating, by the switch device, the ARP request packet and a port number of an ingress port receiving the ARP request packet on the switch device in an information reporting message; and
   forwarding, by the switch device, the information reporting message to the control device according to the action set; and
   the implementing, by the switch device, the ARP according to a MAC address included in an information delivery message sent by the control device includes:
      receiving, by the switch device, the information delivery message sent by the control device;
      decapsulating, by the switch device, the information delivery message, to obtain an ARP response packet constructed by the control device and a port number of an egress port of the ARP response packet, where the ARP response packet includes a MAC address of the switch device, and the MAC address of the switch device is a MAC address that corresponds to the IP address of the switch device and the port number of the ingress port and is obtained by the control device after the control device searches a saved address correspondence; and
      sending, by the switch device, the ARP response packet from the egress port.

With reference to the first optional implementation manner of the first aspect, in a third optional implementation manner of the first aspect, before the receiving, by a switch device, an ARP packet, the method further includes:
sending, by the switch device after receiving an IP packet, a first information reporting message to the control device, where the first information reporting message is used to request a MAC address corresponding to an IP address included in the IP packet;
receiving, by the switch device, a first information delivery message that is sent by the control device according to the first information reporting message, where the first information delivery message carries an ARP request packet constructed by the control device and a port number of an egress port of the ARP request packet, and the ARP request packet includes the IP address; and
sending, by the switch device, the ARP request packet through the egress port; and
the receiving, by a switch device, an ARP packet is specifically: receiving, by the switch device, an ARP response packet, where the ARP response packet includes the MAC address, and the ARP response packet is a packet sent by an external device receiving the ARP request packet to the switch device after the external device determines that the IP address in the ARP request packet is the same as an IP address of the external device.

With reference to the third optional implementation manner of the first aspect, in a fourth optional implementation manner of the first aspect, the sending, by the switch device, the information reporting message including the ARP packet to the control device according to the first flow entry includes:
matching, by the switch device, a packet type of the ARP response packet with the match item of the first flow entry, to obtain the action set of the first flow entry;
encapsulating, by the switch device, the ARP response packet and a port number of an ingress port receiving the ARP response packet on the switch device in a second information reporting message; and
forwarding, by the switch device, the second information reporting message to the control device according to the action set; and
the implementing, by the switch device, the ARP according to a MAC address included in an information delivery message sent by the control device includes:
   receiving, by the switch device, a second information delivery message sent by the control device, where the second information delivery message includes a correspondence between the IP address of the external device and a MAC address of the external device; and
   obtaining, by the switch device according to the second information delivery message, a second flow entry used to forward an IP packet to the external device, where a match item of the second flow entry is that a packet type is IP packet and a destination IP address is the IP address of the external device, and an action set of the second flow entry is encapsulating the MAC address of the external device in an IP packet and forwarding the IP packet through the ingress port.

With reference to the third optional implementation manner of the first aspect or the fourth optional implementation manner of the first aspect, in a fifth optional implementation manner of the first aspect, the egress port is all ports on the switch device; and
the sending, by the switch device, the ARP request packet through the egress port is specifically: sending, by the switch device, the ARP request packet through all the ports.

According to a second aspect, an ARP implementation method is provided, where the method includes:
receiving, by a control device, an information reporting message that is sent by a switch device and includes an ARP packet; and
sending, by the control device, an information delivery message including a MAC address to the switch device according to the information reporting message, so that the switch device implements the ARP according to the MAC address.

With reference to the second aspect, in a first optional implementation manner of the second aspect, before the receiving, by a control device, an information reporting message that is sent by a switch device and includes an ARP packet, the method further includes:
delivering, by the control device to the switch device, a first flow entry used to forward an ARP packet, where a match item of the first flow entry is that a packet type is ARP packet, and an action set of the first flow entry is forwarding an ARP packet to the control device.

With reference to the first optional implementation manner of the second aspect, in a second optional implementation manner of the second aspect, the receiving, by a control device, an information reporting message that is sent by a switch device and includes an ARP packet is specifically:
receiving, by the control device, an information reporting message that is sent by the switch device and includes an ARP request packet, where the information reporting message is a message sent by the switch device to the control device according to the action set of the first flow entry that is obtained after the switch device matches the ARP request packet with the match item of the first flow entry, the ARP request packet and a port number of an ingress port receiving the ARP request packet on the switch device are encapsulated in the information reporting message, and the ARP request packet includes an IP address of the switch device; and
the sending, by the control device, an information delivery message including a MAC address to the switch device according to the information reporting message includes:
   decapsulating, by the control device, the information reporting message, to obtain the IP address of the switch device and the port number of the ingress port that are included in the ARP request packet;
   searching, by the control device, a saved address correspondence, to obtain a MAC address, which corresponds to the IP address of the switch device and the port number of the ingress port, of the switch device;
   encapsulating, by the control device, an ARP response packet that is constructed according to the MAC address of the switch device, and a port number of an egress port of the ARP response packet in an information delivery message; and
   sending, by the control device, the information delivery message to the switch device, so that the switch device sends the ARP response packet from the egress port after decapsulating the information delivery message to obtain the ARP response packet and the port number of the egress port.

With reference to the first optional implementation manner of the second aspect, in a third optional implementation manner of the second aspect, before the receiving, by a control device, an information reporting message that is sent by a switch device and includes an ARP packet, the method further includes:
receiving, by the control device, a first information reporting message sent by the switch device and used to request a MAC address of the external device, where the first information reporting message is a message sent by the switch device to the control device after the switch device receives an IP packet, and the first information reporting message is used to request a MAC address corresponding to an IP address included in the IP packet; and
generating, by the control device, a first information delivery message according to the first information reporting message, where the first information delivery message carries an ARP request packet constructed by the control device and a port number of an egress port of the ARP request packet, and the ARP request packet includes the IP address; and
the receiving, by a control device, an information reporting message that is sent by a switch device and includes an ARP packet is specifically:
   receiving, by the control device, a second information reporting message that is sent by the switch device and includes an ARP response packet, where the second information reporting message is a message sent by the switch device to the control device according to the action set of the first flow entry that is obtained after the switch device matches the ARP response packet with the match item of the first flow entry, the ARP response packet and a port number of an ingress port receiving the ARP response packet on the switch device are encapsulated in the second information reporting message, the ARP response packet is a packet sent by the external device receiving the ARP request packet to the switch device after the external device determines that the IP address in the ARP request packet is the same as an IP address of the external device, and the ARP response packet includes the MAC address of the external device.

With reference to the third optional implementation manner of the second aspect, in a fourth optional implementation manner of the second aspect, the sending, by the control device, an information delivery message including a MAC address to the switch device according to the information reporting message includes:
obtaining, by the control device, a second information delivery message through encapsulation according to the second information reporting message, where the second information delivery message includes a correspondence between the IP address of the external device and the MAC address of the external device; and
sending, by the control device, the second information delivery message to the switch device, so that the switch device obtains, according to the second information delivery message, a second flow entry used to forward an IP packet to the external device, where a match item of the second flow entry is that a packet type is IP packet and a destination IP address is the IP address of the external device, and an action set of the second flow entry is encapsulating the MAC address of the external device in an IP packet and forwarding the IP packet through the ingress port.

With reference to the third optional implementation manner of the second aspect or the fourth optional implementation manner of the second aspect, in a fifth optional implementation manner of the second aspect, the egress port is all ports on the switch device, so that the switch device sends the ARP request packet through all the ports.

According to a third aspect, a switch device is provided, where the switch device includes:
a receiving unit, configured to receive an ARP packet;
a reporting unit, configured to send an information reporting message including the ARP packet received by the receiving unit to a control device; and
an implementing unit, configured to implement the ARP according to a MAC address included in an information delivery message sent by the control device, where the information delivery message is a message sent by the control device according to the information reporting message reported by the reporting unit.

With reference to the third aspect, in a first optional implementation manner of the third aspect, the receiving unit is further configured to receive a first flow entry delivered by the control device and used to forward an ARP packet, where a match item of the first flow entry is that a packet type is ARP packet, and an action set of the first flow entry is forwarding an ARP packet to the control device;
the switch device further includes:
a saving unit, configured to save the first flow entry received by the receiving unit; and
the reporting unit is specifically configured to send the information reporting message including the ARP packet to the control device according to the first flow entry saved by the saving unit.

With reference to the first optional implementation manner of the third aspect, in a second optional implementation manner of the third aspect, the receiving unit is specifically configured to receive an ARP request packet, where the ARP request packet includes an Internet Protocol IP address of the switch device;
the reporting unit includes:
a first matching subunit, configured to match a packet type of the ARP request packet with the match item of the first flow entry, to obtain the action set of the first flow entry;
a first encapsulating subunit, configured to encapsulate the ARP request packet and a port number of an ingress port receiving the ARP request packet on the switch device in an information reporting message; and
a first forwarding subunit, configured to forward the information reporting message to the control device according to the action set; and
the implementing unit includes:
   a first receiving subunit, configured to receive the information delivery message sent by the control device;
   a first decapsulating subunit, configured to decapsulate the information delivery message, to obtain an ARP response packet constructed by the control device and a port number of an egress port of the ARP response packet, where the ARP response packet includes a MAC address of the switch device, and the MAC address of the switch device is a MAC address that corresponds to the IP address of the switch device and the port number of the ingress port and is obtained by the control device after the control device searches a saved address correspondence; and
   a first sending subunit, configured to send the ARP response packet from the egress port.

With reference to the first optional implementation manner of the third aspect, in a third optional implementation manner of the third aspect, the reporting unit is further configured to send a first information reporting message to the control device after an IP packet is received, where the first information reporting message is used to request a MAC address corresponding to an IP address included in the IP packet;
the receiving unit is further configured to receive a first information delivery message that is sent by the control device according to the first information reporting message, where the first information delivery message carries an ARP request packet constructed by the control device and a port number of an egress port of the ARP request packet, and the ARP request packet includes the IP address;
the reporting unit is further configured to send the ARP request packet through the egress port; and
the receiving unit is specifically configured to receive an ARP response packet, where the ARP response packet includes the MAC address, and the ARP response packet is a packet sent by an external device receiving the ARP request packet to the switch device after the external device determines that the IP address in the ARP request packet is the same as an IP address of the external device.

With reference to the third optional implementation manner of the third aspect, in a fourth optional implementation manner of the third aspect, the reporting unit includes:
a second matching subunit, configured to match a packet type of the ARP response packet with the match item of the first flow entry, to obtain the action set of the first flow entry;
a second encapsulating subunit, configured to encapsulate the ARP response packet and a port number of an ingress port receiving the ARP response packet on the switch device in a second information reporting message; and
a second forwarding subunit, configured to forward the second information reporting message to the control device according to the action set; and
the implementing unit includes:
   a second receiving subunit, configured to receive a second information delivery message sent by the control device, where the second information delivery message includes a correspondence between the IP address of the external device and a MAC address of the external device; and
   a second obtaining subunit, configured to obtain, according to the second information delivery message, a second flow entry used to forward an IP packet to the external device, where a match item of the second flow entry is that a packet type is IP packet and a destination IP address is the IP address of the external device, and an action set of the second flow entry is encapsulating the MAC address of the external device in an IP packet and forwarding the IP packet through the ingress port.

According to a fourth aspect, a control device is provided, where the control device includes:
a receiving unit, configured to receive an information reporting message that is sent by a switch device and includes an ARP packet; and
a processing unit, configured to send an information delivery message including a MAC address to the switch device according to the information reporting message received by the receiving unit, so that the switch device implements the ARP according to the MAC address.

With reference to the fourth aspect, in a first optional implementation manner of the fourth aspect, the control device further includes:
a delivering unit, configured to deliver, to the switch device, a first flow entry used to forward an ARP packet, where a match item of the first flow entry is that a packet type is ARP packet, and an action set of the first flow entry is forwarding an ARP packet to the control device.

With reference to the first optional implementation manner of the fourth aspect, in a second optional implementation manner of the fourth aspect, the receiving unit is specifically configured to receive an information reporting message that is sent by the switch device and includes an ARP request packet, where the information reporting message is a message sent by the switch device to the control device according to the action set of the first flow entry that is obtained after the switch device matches the ARP request packet with the match item of the first flow entry, the ARP request packet and a port number of an ingress port receiving the ARP request packet on the switch device are encapsulated in the information reporting message, and the ARP request packet includes an IP address of the switch device; and
the processing unit includes:
a first decapsulating subunit, configured to decapsulate the information reporting message, to obtain the IP address of the switch device and the port number of the ingress port that are included in the ARP request packet;
a first searching subunit, configured to search a saved address correspondence, to obtain a MAC address, which corresponds to the IP address of the switch device and the port number of the ingress port, of the switch device;
a first encapsulating subunit, configured to encapsulate an ARP response packet that is constructed according to the MAC address of the switch device, and a port number of an egress port of the ARP response packet in an information delivery message; and
a first delivering subunit, configured to send the information delivery message to the switch device, so that the switch device sends the ARP response packet from the egress port after decapsulating the information delivery message to obtain the ARP response packet and the port number of the egress port.

With reference to the first optional implementation manner of the fourth aspect, in a third optional implementation manner of the fourth aspect, the receiving unit is further configured to receive a first information reporting message sent by the switch device and used to request a MAC address of the external device, where the first information reporting message is a message sent by the switch device to the control device after the switch device receives an IP packet, and the first information reporting message is used to request a MAC address corresponding to an IP address included in the IP packet;
the processing unit is further configured to generate a first information delivery message according to the first information reporting message, where the first information delivery message carries an ARP request packet constructed by the control device and a port number of an egress port of the ARP request packet, and the ARP request packet includes the IP address; and
the receiving unit is specifically configured to receive a second information reporting message that is sent by the switch device and includes an ARP response packet, where the second information reporting message is a message sent by the switch device to the control device according to the action set of the first flow entry that is obtained after the switch device matches the ARP response packet with the match item of the first flow entry, the ARP response packet and a port number of an ingress port receiving the ARP response packet on the switch device are encapsulated in the second information reporting message, the ARP response packet is a packet sent by the external device receiving the ARP request packet to the switch device after the external device determines that the IP address in the ARP request packet is the same as an IP address of the external device, and the ARP response packet includes the MAC address of the external device.

With reference to the third optional implementation manner of the fourth aspect, in a fourth optional implementation manner of the fourth aspect, the processing unit includes:
a second encapsulating subunit, configured to obtain a second information delivery message through encapsulation according to the second information reporting message, where the second information delivery message includes a correspondence between the IP address of the external device and the MAC address of the external device; and
a second delivering subunit, configured to send the second information delivery message to the switch device, so that the switch device obtains, according to the second information delivery message, a second flow entry used to forward an IP packet to the external device, where a match item of the second flow entry is that a packet type is IP packet and a destination IP address is the IP address of the external device, and an action set of the second flow entry is encapsulating the MAC address of the external device in an IP packet and forwarding the IP packet through the ingress port.

According to a fifth aspect, a switch device is provided, where the switch device includes a network interface, a memory, a transceiver, and a processor, where
the network interface is configured to connect to a control device;
the memory is configured to save a flow entry;
the transceiver is configured to receive an ARP packet; and
the processor is configured to send an information reporting message including the ARP packet to the control device by using the transceiver, and implement the ARP according to a MAC address included in an information delivery message sent by the control device, where the information delivery message is a message sent by the control device according to the information reporting message.

With reference to the fifth aspect, in a first optional implementation manner of the fifth aspect, the transceiver is further configured to receive a first flow entry delivered by the control device and used to forward an ARP packet, where a match item of the first flow entry is that a packet type is ARP packet, and an action set of the first flow entry is forwarding an ARP packet to the control device;
the memory is specifically configured to save the first flow entry; and
the processor is specifically configured to send the information reporting message including the ARP packet to the control device according to the first flow entry by using the transceiver.

With reference to the first optional implementation manner of the fifth aspect, in a second optional implementation manner of the fifth aspect, the transceiver is specifically configured to receive an ARP request packet, where the ARP request packet includes an Internet Protocol IP address of the switch device; and
the processor is specifically configured to match a packet type of the ARP request packet with the match item of the first flow entry, to obtain the action set of the first flow entry; encapsulate the ARP request packet and a port number of an ingress port receiving the ARP request packet on the switch device in an information reporting message; forward the information reporting message to the control device according to the action set; decapsulate the information delivery message sent by the control device and received by the transceiver, to obtain an ARP response packet constructed by the control device and a port number of an egress port of the ARP response packet, where the ARP response packet includes a MAC address of the switch device, and the MAC address of the switch device is a MAC address that corresponds to the IP address of the switch device and the port number of the ingress port and is obtained by the control device after the control device searches a saved address correspondence; and send the ARP response packet from the egress port.

With reference to the first optional implementation manner of the fifth aspect, in a third optional implementation manner of the fifth aspect, the transceiver is further configured to send, after receiving an IP packet, a first information reporting message to the control device, where the first information reporting message is used to request a MAC address corresponding to an IP address included in the IP packet; and receive a first information delivery message that is sent by the control device according to the first information reporting message, where the first information delivery message carries an ARP request packet constructed by the control device and a port number of an egress port of the ARP request packet; and send the ARP request packet through the egress port, where the ARP request packet includes the IP address; and
the transceiver is specifically configured to receive an ARP response packet, where the ARP response packet includes the MAC address, and the ARP response packet is a packet sent by an external device receiving the ARP request packet to the switch device after the external device determines that the IP address in the ARP request packet is the same as an IP address of the external device.

With reference to the third optional implementation manner of the fifth aspect, in a fourth optional implementation manner of the fifth aspect, the processor is specifically configured to match a packet type of the ARP response packet with the match item of the first flow entry, to obtain the action set of the first flow entry; encapsulate the ARP response packet and a port number of an ingress port receiving the ARP response packet on the switch device in a second information reporting message; forward the second information reporting message to the control device according to the action set; receive, by using the transceiver, a second information delivery message sent by the control device, where the second information delivery message includes a correspondence between the IP address of the external device and a MAC address of the external device; and obtain, according to the second information delivery message, a second flow entry used to forward an IP packet to the external device, where a match item of the second flow entry is that a packet type is IP packet and a destination IP address is the IP address of the external device, and an action set of the second flow entry is encapsulating the MAC address of the external device in an IP packet and forwarding the IP packet through the ingress port.

According to a sixth aspect, a control device is provided, where the control device includes a network interface, a transceiver, and a processor, where
the network interface is configured to connect to a switch device;
the transceiver is configured to receive an information reporting message that is sent by the switch device and includes an ARP packet; and
the processor is configured to send an information delivery message including a MAC address to the switch device according to the information reporting message by using the transceiver, so that the switch device implements the ARP according to the MAC address.

With reference to the sixth aspect, in a first optional implementation manner of the sixth aspect, the processor is further configured to deliver, to the switch device by using the transceiver, a first flow entry used to forward an ARP packet, where a match item of the first flow entry is that a packet type is ARP packet, and an action set of the first flow entry is forwarding an ARP packet to the control device.

With reference to the first optional implementation manner of the sixth aspect, in a second optional implementation manner of the sixth aspect, the transceiver is specifically configured to receive an information reporting message that is sent by the switch device and includes an ARP request packet, where the information reporting message is a message sent by the switch device to the control device according to the action set of the first flow entry that is obtained after the switch device matches the ARP request packet with the match item of the first flow entry, the ARP request packet and a port number of an ingress port receiving the ARP request packet on the switch device are encapsulated in the information reporting message, and the ARP request packet includes an IP address of the switch device; and
the processor is specifically configured to decapsulate the information reporting message, to obtain the IP address of the switch device and the port number of the ingress port that are included in the ARP request packet; search a saved address correspondence, to obtain a MAC address, which corresponds to the IP address of the switch device and the port number of the ingress port, of the switch device; encapsulate an ARP response packet that is constructed according to the MAC address of the switch device, and a port number of an egress port of the ARP response packet in an information delivery message; and send the information delivery message to the switch device by using the transceiver, so that the switch device sends the ARP response packet from the egress port after decapsulating the information delivery message to obtain the ARP response packet and the port number of the egress port.

With reference to the first optional implementation manner of the sixth aspect, in a third optional implementation manner of the sixth aspect, the transceiver is further configured to receive a first information reporting message sent by the switch device and used to request a MAC address of the external device, where the first information reporting message is a message sent by the switch device to the control device after the switch device receives an IP packet, and the first information reporting message is used to request a MAC address corresponding to an IP address included in the IP packet;
the processor is further configured to generate a first information delivery message according to the first information reporting message, where the first information delivery message carries an ARP request packet constructed by the control device and a port number of an egress port of the ARP request packet, and the ARP request packet includes the IP address; and
the transceiver is specifically configured to receive a second information reporting message that is sent by the switch device and includes an ARP response packet, where the second information reporting message is a message sent by the switch device to the control device according to the action set of the first flow entry that is obtained after the switch device matches the ARP response packet with the match item of the first flow entry, the ARP response packet and a port number of an ingress port receiving the ARP response packet on the switch device are encapsulated in the second information reporting message, the ARP response packet is a packet sent by the external device receiving the ARP request packet to the switch device after the external device determines that the IP address in the ARP request packet is the same as an IP address of the external device, and the ARP response packet includes the MAC address of the external device.

With reference to the third optional implementation manner of the sixth aspect, in a fourth optional implementation manner of the sixth aspect, the processor is specifically configured to obtain a second information delivery message through encapsulation according to the second information reporting message, where the second information delivery message includes a correspondence between the IP address of the external device and the MAC address of the external device; and send the second information delivery message to the switch device by using the transceiver, so that the switch device obtains, according to the second information delivery message, a second flow entry used to forward an IP packet to the external device, where a match item of the second flow entry is that a packet type is IP packet and a destination IP address is the IP address of the external device, and an action set of the second flow entry is encapsulating the MAC address of the external device in an IP packet and forwarding the IP packet through the ingress port.

In the embodiments of the present invention, a switch device receives an ARP packet, and sends an information reporting message including the ARP packet to a control device; the control device sends an information delivery message including a MAC address to the switch device according to the information reporting message; the switch device implements the ARP according to the MAC address included in the information delivery message. By means of the embodiments of the present invention, although a switch device in an SDN network does not have a capability of supporting the ARP protocol, the switch device can report an ARP packet to a control device and implement ARP interaction with an external device with the assistance of the control device, thereby improving a data transmission capability of the SDN network.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1A is a schematic diagram of an architecture of an SDN network applied in the embodiments of the present invention;
FIG. 1B is a flowchart of an embodiment of an ARP implementation method according to the present invention;
FIG. 1C is a flowchart of another embodiment of an ARP implementation method according to the present invention;
FIG. 2 is a flowchart of another embodiment of an ARP implementation method according to the present invention;
FIG. 3 is a flowchart of another embodiment of an ARP implementation method according to the present invention;
FIG. 4 is a block diagram of an embodiment of a switch device according to the present invention;
FIG. 5 is a block diagram of another embodiment of a switch device according to the present invention;
FIG. 6 is a block diagram of another embodiment of a switch device according to the present invention;
FIG. 7 is a block diagram of an embodiment of a control device according to the present invention;
FIG. 8 is a block diagram of another embodiment of a control device according to the present invention; and
FIG. 9 is a block diagram of another embodiment of a control device according to the present invention.

### DESCRIPTION OF EMBODIMENTS

To make a person skilled in the art understand the technical solutions in the embodiments of the present invention better, and make the objectives, features, and advantages of the embodiments of the present invention clearer, the following further describes the technical solutions in the embodiments of the present invention in detail with reference to the accompanying drawings.

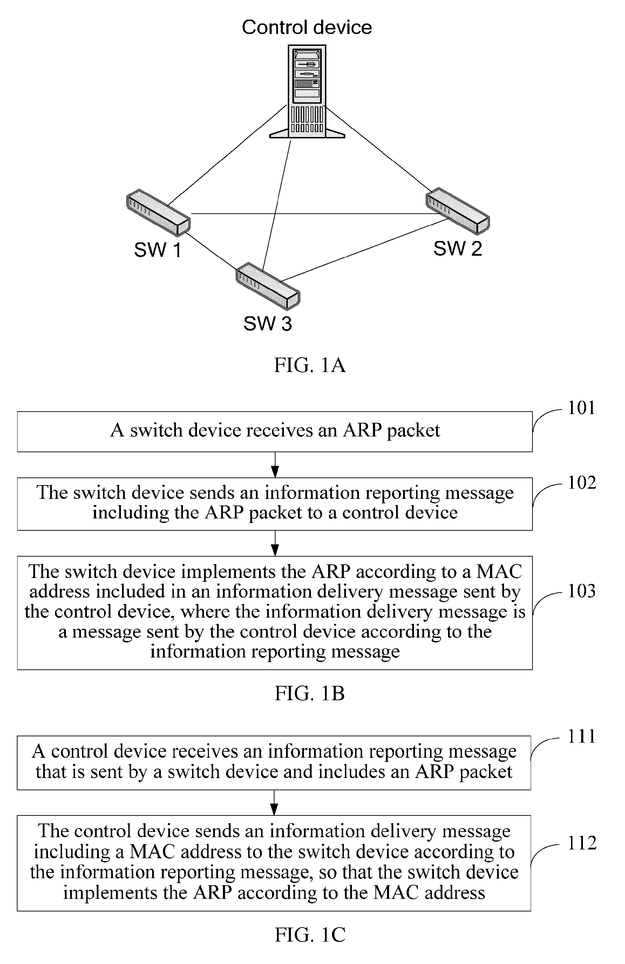

Refer to FIG. 1A, which is a schematic diagram of an architecture of an SDN network applied in the embodiments of the present invention.

The SDN network shown in FIG. 1A may include one control device and three switch devices, where the three switch devices are SW 1, SW 2, and SW 3, and the control device and the switch devices are interconnected. The control device is a control device based on the OpenFlow protocol. A flow entry is set on each switch device. The control device can centrally query and manage flow entries on all the switch devices. When transmitting each data flow, the switch device needs to obtain a forwarding rule from the control device and store the forwarding rule as one flow entry. That is, each flow entry stored by the switch device can identify one data flow. Generally, fields included in each flow entry mainly include a match item and an action set, where the match item represents a condition that a data flow needs to satisfy, and the action set represents an action to be executed on a data flow that satisfies the match item. In the embodiments of the present invention, ARP interaction between the switch device and an external device is implemented based on the OpenFlow protocol, so that the switch device processes an ARP packet by means of flow entry matching with the assistance of the control device.

Refer to FIG. 1B, which is a flowchart of an embodiment of an ARP implementation method according to the present invention. This embodiment describes an ARP implementation process from the perspective of a switch device.

Step 101: A switch device receives an ARP packet.

Before receiving the ARP packet, the switch device may receive a first flow entry delivered by a control device and used to forward an ARP packet, where a match item of the first flow entry is that a packet type is ARP packet, and an action set of the first flow entry is forwarding an ARP packet to the control device; the switch device saves the first flow entry.

In a first optional implementation manner, the switch device may receive an ARP request packet, where the ARP request packet includes an Internet Protocol (Internet Protocol, IP) address of the switch device.

In a second optional implementation manner, the switch device may send, after receiving an IP packet, a first information reporting message to the control device, where the first information reporting message is used to request a MAC address corresponding to an IP address included in the IP packet, and the switch device may send the first information reporting message in a process of processing the IP packet including the IP address or may send the first information reporting message before sending the IP packet including the IP address; receive a first information delivery message that is sent by the control device according to the first information reporting message, where the first information delivery message carries an ARP request packet constructed by the control device and a port number of an egress port of the ARP request packet, and the ARP request packet includes the IP address; send the ARP request packet through the egress port; and receive an ARP response packet, where the ARP response packet includes the MAC address, and the ARP response packet is a packet sent by an external device receiving the ARP request packet to the switch device after the external device determines that the IP address in the ARP request packet is the same as an IP address of the external device.

Step 102: The switch device sends an information reporting message including the ARP packet to a control device.

The switch device may send the information reporting message including the ARP packet to the control device according to the first flow entry.

With reference to the first optional implementation manner of step 101, in a first optional implementation manner of step 102, the switch device may match a packet type of the ARP request packet with the match item of the first flow entry, to obtain the action set of the first flow entry; encapsulate the ARP request packet and a port number of an ingress port receiving the ARP request packet on the switch device in an information reporting message; and forward the information reporting message to the control device according to the action set.

With reference to the second optional implementation manner of step 101, in a second optional implementation manner of step 102, the switch device may match a packet type of the ARP response packet with the match item of the first flow entry, to obtain the action set of the first flow entry; encapsulate the ARP response packet and a port number of an ingress port receiving the ARP response packet on the switch device in a second information reporting message; and forward the second information reporting message to the control device according to the action set.

Step 103: The switch device implements the ARP according to a MAC address included in an information delivery message sent by the control device, where the information delivery message is a message sent by the control device according to the information reporting message.

With reference to the first optional implementation manner of step 102, in a first optional implementation manner of step 103, the switch device may receive the information delivery message sent by the control device; decapsulate the information delivery message, to obtain an ARP response packet constructed by the control device and a port number of an egress port of the ARP response packet, where the ARP response packet includes a MAC address of the switch device, and the MAC address of the switch device is a MAC address that corresponds to the IP address of the switch device and the port number of the ingress port and is obtained by the control device after the control device searches a saved address correspondence; and send the ARP response packet from the egress port.

With reference to the second optional implementation manner of step 102, in a second optional implementation manner of step 103, the switch device may receive a second information delivery message sent by the control device, where the second information delivery message includes a correspondence between the IP address of the external device and a MAC address of the external device; and obtain, according to the second information delivery message, a second flow entry used to forward an IP packet to the external device, where a match item of the second flow entry is that a packet type is IP packet and a destination IP address is the IP address of the external device, and an action set of the second flow entry is encapsulating the MAC address of the external device in an IP packet and forwarding the IP packet through the ingress port. The egress port may be all ports on the switch device; the sending, by the switch device, the ARP request packet through the egress port is specifically: sending, by the switch device, the ARP request packet through all the ports.

As can be seen from the foregoing embodiment, although a switch device in an SDN network does not have a capability of supporting the ARP protocol, the switch device can report an ARP packet to a control device and implement ARP interaction with an external device with the assistance of the control device, thereby improving a data transmission capability of the SDN network.

Refer to FIG. 1C, which is a flowchart of another embodiment of an ARP implementation method according to the present invention. This embodiment describes an ARP implementation process from the perspective of a control device.

Step 111: A control device receives an information reporting message that is sent by a switch device and includes an ARP packet.

Before receiving the information reporting message that is sent by the switch device and includes the ARP packet, the control device may deliver, to the switch device, a first flow entry used to forward an ARP packet, where a match item of the first flow entry is that a packet type is ARP packet, and an action set of the first flow entry is forwarding an ARP packet to the control device.

In a first optional implementation manner, the control device may receive an information reporting message that is sent by the switch device and includes an ARP request packet, where the information reporting message is a message sent by the switch device to the control device according to the action set of the first flow entry that is obtained after the switch device matches the ARP request packet with the match item of the first flow entry, the ARP request packet and a port number of an ingress port receiving the ARP request packet on the switch device are encapsulated in the information reporting message, and the ARP request packet includes an IP address of the switch device.

In a second optional implementation manner, the control device may receive a first information reporting message sent by the switch device and used to request a MAC address of the external device, where the first information reporting message is a message sent by the switch device to the control device after the switch device receives an IP packet, and the first information reporting message is used to request a MAC address corresponding to an IP address included in the IP packet; generate a first information delivery message according to the first information reporting message, where the first information delivery message carries an ARP request packet constructed by the control device and a port number of an egress port of the ARP request packet, and the ARP request packet includes the IP address; and receive a second information reporting message that is sent by the switch device and includes an ARP response packet, where the second information reporting message is a message sent by the switch device to the control device according to the action set of the first flow entry that is obtained after the switch device matches the ARP response packet with the match item of the first flow entry, the ARP response packet and a port number of an ingress port receiving the ARP response packet on the switch device are encapsulated in the second information reporting message, the ARP response packet is a packet sent by the external device receiving the ARP request packet to the switch device after the external device determines that the IP address in the ARP request packet is the same as an IP address of the external device, and the ARP response packet includes the MAC address of the external device.

Step 112: The control device sends an information delivery message including a MAC address to the switch device according to the information reporting message, so that the switch device implements the ARP according to the MAC address.

With reference to the first optional implementation manner of step 111, in a first optional implementation manner of step 112, the control device may decapsulate the information reporting message, to obtain the IP address of the switch device and the port number of the ingress port that are included in the ARP request packet; search a saved address correspondence, to obtain a MAC address, which corresponds to the IP address of the switch device and the port number of the ingress port, of the switch device; encapsulate an ARP response packet that is constructed according to the MAC address of the switch device, and a port number of an egress port of the ARP response packet in an information delivery message; and send the information delivery message to the switch device, so that the switch device sends the ARP response packet from the egress port after decapsulating the information delivery message to obtain the ARP response packet and the port number of the egress port.

With reference to the second optional implementation manner of step 111, in a second optional implementation manner of step 112, the control device may obtain a second information delivery message through encapsulation according to the second information reporting message, where the second information delivery message includes a correspondence between the IP address of the external device and the MAC address of the external device; and send the second information delivery message to the switch device, so that the switch device obtains, according to the second information delivery message, a second flow entry used to forward an IP packet to the external device, where a match item of the second flow entry is that a packet type is IP packet and a destination IP address is the IP address of the external device, and an action set of the second flow entry is encapsulating the MAC address of the external device in an IP packet and forwarding the IP packet through the ingress port. The egress port may be all ports on the switch device, so that the switch device sends the ARP request packet through all the ports.

As can be seen from the foregoing embodiment, although a switch device in an SDN network does not have a capability of supporting the ARP protocol, the switch device can report an ARP packet to a control device and implement ARP interaction with an external device with the assistance of the control device, thereby improving a data transmission capability of the SDN network.

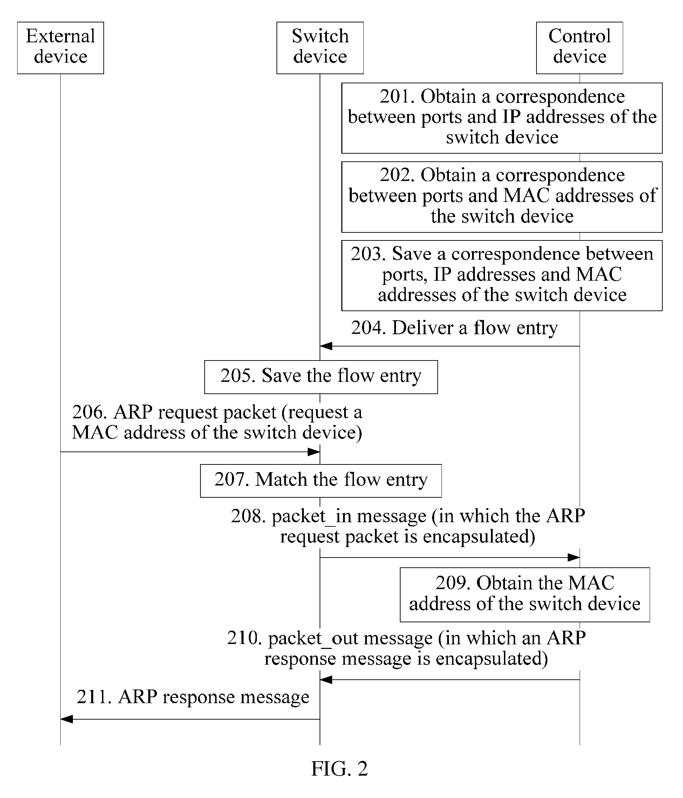

Refer to FIG. 2, which is a flowchart of another embodiment of an ARP implementation method according to the present invention. In this embodiment, an external device needs to obtain a MAC address of a switch device.

Step 201: A control device obtains a correspondence between ports of a switch device and IP addresses.

In this embodiment, the control device may configure an IP address for each port of the switch device, and therefore the control device may obtain a correspondence between each port of the switch device and an IP address according to a configuration result; or if an IP address of each port of the switch device is configured by a third-party device, the control device may obtain a correspondence between each port of the switch device and an IP address from the third-party device.

The foregoing correspondence between ports of the switch device and IP addresses may be shown in Table 1:

**Table 1**

| | | |
|---|---|---|
| Identifier of the switch device | Port number | IP address |

In Table 1, the identifier of the switch device may be specifically an ID number of the switch device, or a name of the switch device, or any mark that can be identified by the control device; the port number is an identifier of a port on the switch device. Generally, one switch device has multiple ports; therefore, for an identifier of each switch device, there is a correspondence between multiple port numbers and IP addresses.

Step 202: The control device obtains a correspondence between ports and MAC addresses of the switch device.

In this step, the switch device may actively report a correspondence between ports and MAC addresses of the switch device to the control device; or the control device may send a request message to the switch device to request a correspondence between ports and MAC addresses of the switch device, and after receiving the request message, the switch device returns the correspondence between ports and MAC addresses to the control device.

The foregoing correspondence between ports and MAC addresses of the switch device may be shown in Table 2:

**Table 2**

| | | |
|---|---|---|
| Identifier of the switch device | Port number | MAC address |

As described above in Table 1, the identifier of the switch device may be specifically an ID number of the switch device, or a name of the switch device, or any mark that can be identified by the control device; the port number is an identifier of a port on the switch device. Generally, one switch device has multiple ports; therefore, for an identifier of each switch device, there is also a correspondence between multiple port numbers and MAC addresses.

Step 203: The control device obtains a correspondence between IP addresses and MAC addresses of the switch device.

In this step, the control device may obtain, based on content saved in Table 1 in step 201 and content saved in Table 2 in step 202, port numbers, IP addresses, and MAC addresses that correspond to the identifier of the switch device. The foregoing correspondence is shown in Table 3:

**Table 3**

| | | | |
|---|---|---|---|
| Identifier of the switch device | Port number | IP address | MAC address |

As can be known from Table 3, there are multiple ports on each switch device, and different ports are used to connect to different external devices; therefore, an identifier of one switch device may correspond to a correspondence between multiple port numbers, IP addresses, and MAC addresses.

Step 204: The control device delivers, to the switch device, a flow entry used to forward an ARP packet.

In this step, the control device constructs a flow entry used to forward an ARP packet, where a match item included in the flow entry is: packet type==ARP packet; and an action set included in the flow entry is: forwarding an ARP packet to the control device.

The control device may add the constructed flow entry to a flow rule installation message (flow_mod message) and deliver the flow rule installation message to the switch device. For example, a format of the flow rule installation message may be specifically: <flow rule installation message>={match item, <action set>}, where
content used to represent the match item "ARP packet" in the flow rule installation message may be specifically:
OXM_OF_ETH_TYPE=0x0806, and
OXM_OF_ARP_TYPE=ARP message, where
in the foregoing content of the match item, when "OXM_OF_ETH_TYPE" is 0x0806, it indicates that a packet type is ARP packet; "OXM_OF_ARP_TYPE" is used to represent a specific type of an ARP packet, for example, ARP request packet or ARP response packet; in this embodiment, "OXM_OF_ARP_TYPE" is an optional field in the match item.

In the foregoing content of the match item, content used to represent the action set "forwarding an ARP packet to the control device" in the flow rule installation message may be specifically:
OFPAT_OUTPUT=OFPP_CONTROLLER, where
in the foregoing action set, "OFPP_CONTROLLER" represents a port number of a port that is on the switch device and used to connect to the control device, that is, the switch device forwards an ARP packet to the control device through the port having the port number.

Step 205: After receiving the flow entry used to forward an ARP packet, the switch device saves the flow entry.

After receiving the flow rule installation message (flow_mod message), the switch device obtains, from the message, the flow entry used to forward an ARP packet, and saves the flow entry.

Step 206: An external device sends an ARP request packet to the switch device.

In this embodiment, the external device may be specifically another switch device, gateway, host device, or the like connected to the switch device, which is not limited in this embodiment of the present invention.

When needing to transmit a packet to the switch device, the external device needs to request a MAC address of the switch device, where the MAC address is a MAC address corresponding to a port that is on the switch device and connected to the external device. In this case, the external device sends an ARP request packet (ARP_Request message) to the switch device, where the ARP request packet carries an IP address and a MAC address of the external device that serves as a source device and an IP address of the switch device that serves as a destination device, where the IP address of the switch device is an IP address corresponding to the port that is on the switch device and connected to the external device.

Step 207: The switch device matches the flow entry according to the ARP request packet.

In this step, after receiving the ARP request packet, the switch device learns that a packet type of the ARP request packet is "ARP packet", matches "ARP packet" as a match item with the saved flow entry, and after the flow entry used to forward an ARP packet as shown in step 204 is obtained through matching, learns that the action set corresponding to the flow entry is "forwarding an ARP packet to the control device".

Step 208: The switch device encapsulates the ARP request packet in a Packet_in message according to a matching result, and reports the Packet_in message to the control device.

The switch device encapsulates, according to the action set "forwarding an ARP packet to the control device" obtained through matching in step 207, the ARP request packet in an information reporting message (Packet_in message) defined in the Openflow protocol, where an ingress port number (In_port) carried in the Packet_in message is a port number of a port receiving the ARP request packet on the switch device.

Step 209: The control device obtains a MAC address of the switch device according to the Packet_in message.

In this step, after receiving the Packet_in message, the control device decapsulates the Packet_in message to obtain the ARP request packet carried in the Packet_in message, reads the IP address of the switch device as a destination device from the ARP request packet, and then queries the correspondence shown in Table 3 by using the IP address as a keyword, to obtain a MAC address of the switch device corresponding to the IP address.

Step 210: The control device encapsulates an ARP response packet generated according to the obtained MAC address in a packet_out message, and sends the packet_out message to the switch device.

In this step, the control device constructs an ARP response packet (ARP_Response message) according to the obtained MAC address of the switch device, where the ARP_Response carries the IP address and the MAC address of the switch device that serves as a source device and the IP address and MAC address of the external device that serves as a destination device; then the control device encapsulates the constructed ARP response packet in an information delivery message (packet_out message) defined in the Openflow protocol, where the packet_out message also carries an egress port number (out_port), the egress port number is a port number of a port used to forward the ARP response packet on the switch device, and the egress port number is the same as the ingress port number carried in the Packet_in message in step 208.

Step 211: The switch device sends the ARP response packet carried in the packet_out message to the external device.

After receiving the packet_out message, the switch device decapsulates the packet_out message, to obtain the ARP response packet and the egress port number that are carried in the packet_out message; then the switch device sends the ARP response packet to the external device through the port having the egress port number, thereby completing ARP interaction between the external device and the switch device.

As can be seen from the foregoing embodiment, when an external device needs to obtain a MAC address of a switch device, although the switch device in an SDN network does not have a capability of supporting the ARP protocol, the switch device can report an ARP request packet to a control device and send the MAC address to the external device with the assistance of the control device so as to implement ARP interaction with the external device, thereby improving a data transmission capability of the SDN network.

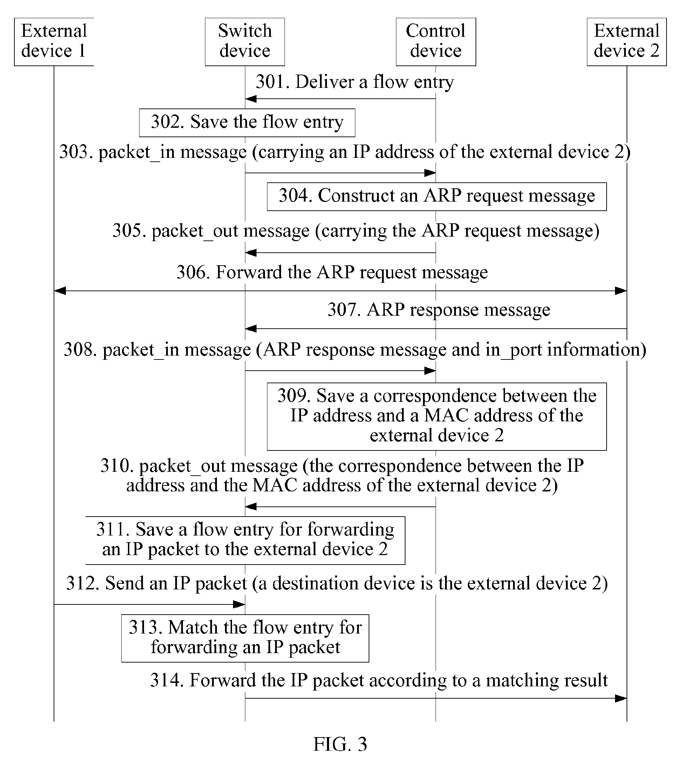

Refer to FIG. 3, which is a flowchart of another embodiment of an ARP implementation method according to the present invention. In this embodiment, a switch device needs to obtain a MAC address of an external device.

Step 301: A control device delivers, to a switch device, a flow entry used to forward an ARP packet.

In this step, the control device constructs a flow entry used to forward an ARP packet, where a match item included in the flow entry is: packet type==ARP packet; and an action set included in the flow entry is: forwarding an ARP packet to the control device.

The control device may add the constructed flow entry to a flow rule installation message (flow_mod message) and deliver the flow rule installation message to the switch device. For example, a format of the flow rule installation message may be specifically: <flow rule installation message>={match item, <action set>}, where
content used to represent the match item "ARP packet" in the flow rule installation message may be specifically:
OXM_OF_ETH_TYPE=0x0806, and
OXM_OF_ARP_TYPE=ARP message, where
in the foregoing content of the match item, when "OXM_OF_ETH_TYPE" is 0x0806, it indicates that a packet type is ARP packet; "OXM_OF_ARP_TYPE" is used to represent a specific type of an ARP packet, for example, ARP request packet or ARP response packet; in this embodiment, "OXM_OF_ARP_TYPE" is an optional field in the match item.

In the foregoing content of the match item, content used to represent the action set "forwarding an ARP packet to the control device" in the flow entry update message may be specifically:
OFPAT_OUTPUT=OFPP_CONTROLLER, where
in the foregoing action set, "OFPP_CONTROLLER" represents a port number of a port that is on the switch device and used to connect to the control device, that is, the switch device forwards an ARP packet to the control device through the port having the port number.

Step 302: After receiving the flow entry used to forward an ARP packet, the switch device saves the flow entry.

After receiving the flow rule installation message (flow_mod message), the switch device obtains, from the message, the flow entry used to forward an ARP packet, and saves the flow entry.

Step 303: The switch device sends, to the control device, a packet_in message used to request a MAC address of an external device 2.

In this embodiment, when an external device 1 needs to send an IP packet to the external device 2 by using the switch device, the IP packet generally includes an IP address of the external device 2 as a destination IP address. Because the switch device is a layer 2 device that forwards a packet based on a MAC address, the switch device needs to obtain a MAC address corresponding to the IP address of the external device 2, so as to forward the received IP packet. In this case, it is assumed that the switch device fails to find, through matching, a flow entry corresponding to the IP packet, and therefore cannot obtain a destination MAC address corresponding to the destination IP address of the IP packet and a policy for forwarding the IP packet. Therefore, the switch device sends an information reporting message (packet_in message) to the control device, where the packet_in message carries the IP address of the external device 2 and carries content "lacking a MAC address corresponding to the IP address" in a reason field.

Step 304: The control device constructs an ARP request packet according to a result of searching an ARP list.

In this step, it is assumed that a correspondence between the IP address and the MAC address of the external device 2 is not saved in an ARP list of the control device. Therefore, after receiving the packet_in message, obtaining the IP address of the external device 2 from the packet_in message, and searching the ARP list according to the IP address, the control device cannot obtain the corresponding MAC address of the external device 2. In this case, the control device constructs an ARP request packet (ARP_Request message), where the ARP request packet carries an IP address and a MAC address of the switch device that serves as a source device and the IP address of the external device 2 that serves as a destination device.

The IP address and the MAC address of the switch device may be carried in the packet_in message sent by the switch device to the control device in step 303; or the control device may pre-save a correspondence between identifiers of switch device and their port numbers, IP addresses, and MAC addresses, and then search the correspondence according to an identifier of the switch device and a port number of a port receiving the IP packet that are carried in the packet_in message, to obtain the IP address and the MAC address of the switch device.

Optionally, the control device may also obtain an IP address of a next-hop gateway of the external device 2 according to a routing relationship between external devices and the switch device in an SDN network, and request a MAC address corresponding to the IP address of the next-hop gateway, which is not limited in this embodiment of the present invention.

Step 305: The control device sends a packet_out message carrying the ARP request packet to the switch device.

In this step, after constructing the ARP request packet, the control device encapsulates the ARP request packet in an information delivery message (packet_out message) defined in the Openflow protocol, where an identifier of an egress port number carried in the packet_out message is "flood", and "flood" represents port numbers of all ports on the switch device.

Step 306: The switch device sends an ARP request packet to external devices according to the packet_out message.

In this step, after receiving the packet_out message, the switch device decapsulates the packet_out message, to obtain the ARP request packet and the egress port number "flood" that are carried in the packet_out message. In this case, the switch device forwards the ARP request packet through all the ports according to instruction of the egress port number "flood".

Step 307: The external device 2 returns an ARP response packet according to the received ARP request packet.

In this step, all external devices associated with the switch device receive the ARP request packet sent by the switch device. Each external device obtains the IP address of the external device 2 that serves as a destination IP address and is carried in the ARP request packet, and compares the destination IP address with an IP address of the external device. Only the IP address of the external device 2 is the same as the destination IP address. Therefore, the external device 2 constructs an ARP response packet, where the ARP response packet carries the IP address and the MAC address of the external device 2 that serves as a source device and an IP address and a MAC address of the switch device that serves as a destination device; then the external device 2 sends the ARP response packet to the switch device.

Step 308: The switch device matches the flow entry according to the ARP response packet, encapsulates the ARP response packet in a Packet_in message according to a matching result, and reports the Packet_in message to the control device.

In this step, after receiving the ARP response packet, the switch device learns that a packet type of the ARP response packet is "ARP packet", matches "ARP packet" as a match item with the saved flow entry, and learns, according to the flow entry used to forward an ARP packet as shown in step 301, that a corresponding action set is "forwarding an ARP packet to the control device"; then the switch device encapsulates, according to the action set "forwarding an ARP packet to the control device" obtained through matching, the ARP response packet in a Packet_in message defined in the Openflow protocol, where an ingress port number (In_port) carried in the Packet_in message is a port number of a port receiving the ARP response packet on the switch device.

Step 309: The control device saves a correspondence between the IP address and the MAC address of the external device 2 according to the Packet_in message.

In this step, after receiving the Packet_in message, the control device decapsulates the Packet_in message to obtain the ARP response packet and the ingress port number (In_prot), further parses the ARP response packet to obtain the IP address and the MAC address of the external device 2, and saves a correspondence between the IP address and the MAC address in the ARP list.

Step 310: The control device encapsulates the correspondence between the IP address and the MAC address of the external device 2 in a packet_out message, and returns the packet_out message to the switch device.

In one implementation manner, after obtaining the correspondence between the IP address and the MAC address of the external device 2, the switch device may encapsulate the correspondence in a packet_out message defined in the Openflow protocol, where an egress port number (out_port) carried in the packet_out message is the port number of the port receiving the ARP response packet on the switch device, that is, is the same as the ingress port number (In_prot) carried in the Packet_in message in step 309.

In another implementation manner, after obtaining the correspondence between the IP address and the MAC address of the external device 2, the control device may construct, for the switch device according to the correspondence, a flow entry used to forward an IP packet to the external device 2, where a match item included in the flow entry is: packet type==IP packet, and destination IP address==IP address of the external device 2, and an action set included in the flow entry is: encapsulating a destination MAC address corresponding to a destination IP address, and forwarding an encapsulated IP packet through a port corresponding to the destination MAC address on the switch device. The control device may add the constructed flow entry to a packet_out message and deliver the packet_out message to the switch device. For example, a format of the packet_out message may be specifically: <flow rule installation message>={match item, <action set>}, where
content used to represent the match item in the packet_out message may be specifically:
OXM_OF_ETH_TYPE=0x0800, and
OXM_OF_IP=IP_1, where
in the foregoing match item, when "OXM_OF_ETH_TYPE" is 0x0800, it indicates that a packet type is IP packet; IP_1 represents the IP address of the external device 2; and
content used to represent the action set in the packet_out message may be specifically:
   OXM_OF_ENCAP_MAC=MAC_1, and
   OFPAT_OUTPUT=port number_1, where
   in the foregoing action set, MAC_1 represents the MAC address of the external device 2, "OXM_OF_ENCAP_MAC=MAC_1" represents encapsulation of MAC_1 in an IP packet, "port number_1" represents a port number of a port receiving an ARP response packet on the switch device, and "OFPAT_OUTPUT=port number_1" represents forwarding of an IP packet in which MAC_1 is encapsulated through the port having the port number_1.

Step 311: The switch device saves, according to the packet_out message, the flow entry for forwarding an IP packet.

Corresponding to the one implementation manner in step 310, after receiving the packet_out message, the switch device decapsulates the packet_out message, to obtain the correspondence between the IP address and the MAC address of the external device 2 and the egress port number (out_port) that are carried in the packet_out message; the switch device constructs, according to the foregoing information, a flow entry used to forward an IP packet to the external device 2, where a match item included in the flow entry is: packet type==IP packet, and destination IP address==IP address of the external device 2, and an action set included in the flow entry is: obtaining and encapsulating a destination MAC address corresponding to a destination IP address, and forwarding an encapsulated IP packet through a port corresponding to the destination MAC address on the switch device; the switch device saves the constructed flow entry, so as to subsequently forward an IP packet to the external device 2 according to the flow entry.

Corresponding to the another implementation manner in step 310, after receiving the packet_out message, the switch device decapsulates the packet_out message, to obtain the flow entry used to the forward an IP packet to the external device 2 and carried in the packet_out message, and saves the flow entry, so as to subsequently forward an IP packet to the external device 2 according to the flow entry.

Step 312: The switch device receives an IP packet sent by an external device 1, where a destination IP address of the IP packet is the IP address of the external device 2.

Step 313: The switch device matches the flow entry according to the received IP packet.

In this step, after receiving the IP packet sent by the external device 1, the switch device obtains the destination IP address in the IP packet, that is, the IP address of the external device 2. At this time, the switch device matches, by using a packet type of the IP packet and the destination IP address carried in the IP packet as a match item, the flow entry shown in step 310, and learns, through matching, that a corresponding action set is "encapsulating a destination MAC address corresponding to a destination IP address, and forwarding an encapsulated IP packet through a port corresponding to the destination MAC address on the switch device", where the destination MAC address corresponding to the destination IP address is the MAC address of the external device 2, and the destination port corresponding to the destination MAC address is the foregoing port receiving the ARP response packet returned by the external device 2. Therefore, the switch device encapsulates the MAC address of the external device 2 in the received IP packet, and forwards the encapsulated IP packet through the destination port, where the IP packet is received by the external device 2.

As can be seen from the foregoing embodiment, when a switch device needs to obtain a MAC address of an external device, although the switch device in an SDN network does not have a capability of supporting the ARP protocol, the switch device can report an ARP response packet to a control device and obtain the MAC address of the external device with the assistance of the control device so as to implement ARP interaction with the external device, thereby improving a data transmission capability of the SDN network.

Corresponding to the embodiments of the ARP implementation method according to the present invention, the present invention further provides embodiments of a switch device and a control device.

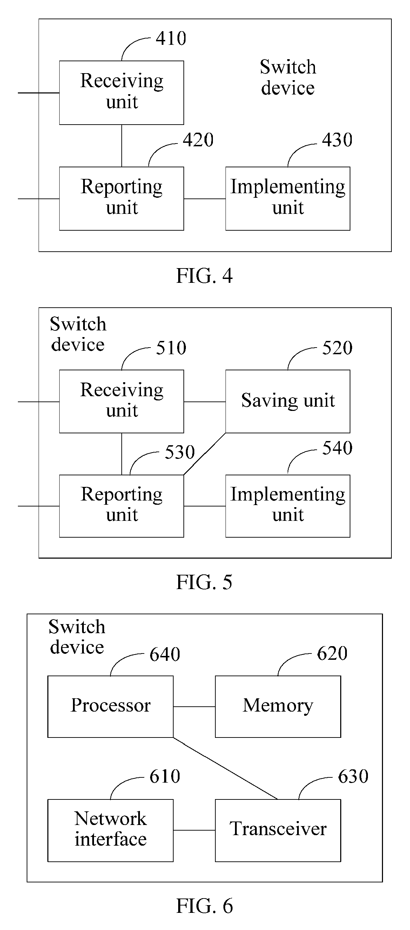

Refer to FIG. 4, which is a block diagram of an embodiment of a switch device according to the present invention.

The switch device includes: a receiving unit 410, a reporting unit 420, and an implementing unit 430, where
the receiving unit 410 is configured to receive an ARP packet;
the reporting unit 420 is configured to send an information reporting message including the ARP packet received by the receiving unit 410 to a control device; and
the implementing unit 430 is configured to implement the ARP according to a MAC address included in an information delivery message sent by the control device, where the information delivery message is a message sent by the control device according to the information reporting message reported by the reporting unit 420.

Refer to FIG. 5, which is a block diagram of another embodiment of a switch device according to the present invention.

The switch device includes: a receiving unit 510, a saving unit 520, a reporting unit 530, and an implementing unit 540, where
the receiving unit 510 is configured to receive a first flow entry delivered by the control device and used to forward an ARP packet, where a match item of the first flow entry is that a packet type is ARP packet, and an action set of the first flow entry is forwarding an ARP packet to the control device;
the saving unit 520 is configured to save the first flow entry received by the receiving unit 510;
the receiving unit 510 is further configured to receive an ARP packet;
the reporting unit 530 is configured to send an information reporting message including the ARP packet to the control device according to the first flow entry saved by the saving unit 520; and
the implementing unit 540 is configured to implement the ARP according to a MAC address included in an information delivery message sent by the control device, where the information delivery message is a message sent by the control device according to the information reporting message reported by the reporting unit 530.

In an optional implementation manner,
the receiving unit 510 may be specifically configured to receive an ARP request packet, where the ARP request packet includes an Internet Protocol IP address of the switch device;
the reporting unit 530 may include (not shown in FIG. 5):
a first matching subunit, configured to match a packet type of the ARP request packet with the match item of the first flow entry, to obtain the action set of the first flow entry;
a first encapsulating subunit, configured to encapsulate the ARP request packet and a port number of an ingress port receiving the ARP request packet on the switch device in an information reporting message; and
a first forwarding subunit, configured to forward the information reporting message to the control device according to the action set; and
the implementing unit 540 may include (not shown in FIG. 5):
   a first receiving subunit, configured to receive the information delivery message sent by the control device;
   a first decapsulating subunit, configured to decapsulate the information delivery message, to obtain an ARP response packet constructed by the control device and a port number of an egress port of the ARP response packet, where the ARP response packet includes a MAC address of the switch device, and the MAC address of the switch device is a MAC address that corresponds to the IP address of the switch device and the port number of the ingress port and is obtained by the control device after the control device searches a saved address correspondence; and
   a first sending subunit, configured to send the ARP response packet from the egress port.

In another optional implementation manner,
the reporting unit 530 may be further configured to send a first information reporting message to the control device after an IP packet is received, where the first information reporting message is used to request a MAC address corresponding to an IP address included in the IP packet;
the receiving unit 510 may be further configured to receive a first information delivery message that is sent by the control device according to the first information reporting message, where the first information delivery message carries an ARP request packet constructed by the control device and a port number of an egress port of the ARP request packet, and the ARP request packet includes the IP address;
the reporting unit 530 may be further configured to send the ARP request packet through the egress port;
the receiving unit 510 may be specifically configured to receive an ARP response packet, where the ARP response packet includes the MAC address, and the ARP response packet is a packet sent by an external device receiving the ARP request packet to the switch device after the external device determines that the IP address in the ARP request packet is the same as an IP address of the external device;
the reporting unit 530 may include (not shown in FIG. 5):
a second matching subunit, configured to match a packet type of the ARP response packet with the match item of the first flow entry, to obtain the action set of the first flow entry;
   a second encapsulating subunit, configured to encapsulate the ARP response packet and a port number of an ingress port receiving the ARP response packet on the switch device in a second information reporting message; and
   a second forwarding subunit, configured to forward the second information reporting message to the control device according to the action set; and
   the implementing unit 540 may include (not shown in FIG. 5):
      a second receiving subunit, configured to receive a second information delivery message sent by the control device, where the second information delivery message includes a correspondence between the IP address of the external device and a MAC address of the external device; and
      a second obtaining subunit, configured to obtain, according to the second information delivery message, a second flow entry used to forward an IP packet to the external device, where a match item of the second flow entry is that a packet type is IP packet and a destination IP address is the IP address of the external device, and an action set of the second flow entry is encapsulating the MAC address of the external device in an IP packet and forwarding the IP packet through the ingress port.

Refer to FIG. 6, which is a block diagram of another embodiment of a switch device according to the present invention.

The switch device includes a network interface 610, a memory 620, a transceiver 630, and a processor 640, where
the network interface 610 is configured to connect to a control device;
the memory 620 is configured to save a flow entry;
the transceiver 630 is configured to receive an ARP packet; and
the processor 640 is configured to send an information reporting message including the ARP packet to the control device by using the transceiver 630, and implement the ARP according to a MAC address included in an information delivery message sent by the control device, where the information delivery message is a message sent by the control device according to the information reporting message.

Further, the transceiver 630 may be further configured to receive a first flow entry delivered by the control device and used to forward an ARP packet, where a match item of the first flow entry is that a packet type is ARP packet, and an action set of the first flow entry is forwarding an ARP packet to the control device; correspondingly, the memory 620 may be specifically configured to save the first flow entry; the processor 640 may be specifically configured to send the information reporting message including the ARP packet to the control device according to the first flow entry by using the transceiver.

In an optional implementation manner,
the transceiver 630 may be specifically configured to receive an ARP request packet, where the ARP request packet includes an Internet Protocol IP address of the switch device; and
the processor 640 may be specifically configured to match a packet type of the ARP request packet with the match item of the first flow entry, to obtain the action set of the first flow entry; encapsulate the ARP request packet and a port number of an ingress port receiving the ARP request packet on the switch device in an information reporting message; forward the information reporting message to the control device according to the action set; decapsulate the information delivery message sent by the control device and received by the transceiver, to obtain an ARP response packet constructed by the control device and a port number of an egress port of the ARP response packet, where the ARP response packet includes a MAC address of the switch device, and the MAC address of the switch device is a MAC address that corresponds to the IP address of the switch device and the port number of the ingress port and is obtained by the control device after the control device searches a saved address correspondence; and send the ARP response packet from the egress port.

In another optional implementation manner,
the transceiver 630 may be further configured to send, after receiving an IP packet, a first information reporting message to the control device, where the first information reporting message is used to request a MAC address corresponding to an IP address included in the IP packet; and receive a first information delivery message that is sent by the control device according to the first information reporting message, where the first information delivery message carries an ARP request packet constructed by the control device and a port number of an egress port of the ARP request packet; and send the ARP request packet through the egress port, where the ARP request packet includes the IP address;
the transceiver 630 may be specifically configured to receive an ARP response packet, where the ARP response packet includes the MAC address, and the ARP response packet is a packet sent by an external device receiving the ARP request packet to the switch device after the external device determines that the IP address in the ARP request packet is the same as an IP address of the external device; and
the processor 640 may be specifically configured to match a packet type of the ARP response packet with the match item of the first flow entry, to obtain the action set of the first flow entry; encapsulate the ARP response packet and a port number of an ingress port receiving the ARP response packet on the switch device in a second information reporting message; forward the second information reporting message to the control device according to the action set; receive, by using the transceiver, a second information delivery message sent by the control device, where the second information delivery message includes a correspondence between the IP address of the external device and a MAC address of the external device; and obtain, according to the second information delivery message, a second flow entry used to forward an IP packet to the external device, where a match item of the second flow entry is that a packet type is IP packet and a destination IP address is the IP address of the external device, and an action set of the second flow entry is encapsulating the MAC address of the external device in an IP packet and forwarding the IP packet through the ingress port.

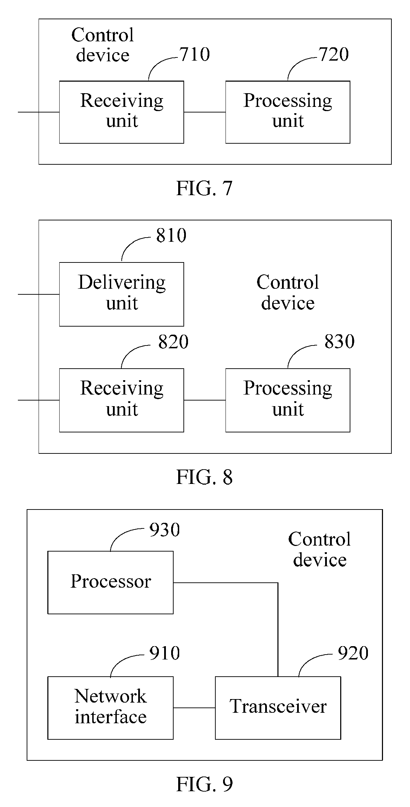

Refer to FIG. 7, which is a block diagram of an embodiment of a control device according to the present invention.

The control device includes: a receiving unit 710 and a processing unit 720, where
the receiving unit 710 is configured to receive an information reporting message that is sent by a switch device and includes an ARP packet; and
the processing unit 720 is configured to send an information delivery message including a MAC address to the switch device according to the information reporting message received by the receiving unit 710, so that the switch device implements the ARP according to the MAC address.

Refer to FIG. 8, which is a block diagram of another embodiment of a control device according to the present invention.

The control device includes: a delivering unit 810, a receiving unit 820, and a processing unit 830, where
the delivering unit 810 is configured to deliver, to the switch device, a first flow entry used to forward an ARP packet, where a match item of the first flow entry is that a packet type is ARP packet, and an action set of the first flow entry is forwarding an ARP packet to the control device;
the receiving unit 820 is configured to receive an information reporting message that is sent by the switch device and includes an ARP packet; and
the processing unit 830 is configured to send an information delivery message including a MAC address to the switch device according to the information reporting message received by the receiving unit 820, so that the switch device implements the ARP according to the MAC address.

In an optional implementation manner,
the receiving unit 820 may be specifically configured to receive an information reporting message that is sent by the switch device and includes an ARP request packet, where the information reporting message is a message sent by the switch device to the control device according to the action set of the first flow entry that is obtained after the switch device matches the ARP request packet with the match item of the first flow entry, the ARP request packet and a port number of an ingress port receiving the ARP request packet on the switch device are encapsulated in the information reporting message, and the ARP request packet includes an IP address of the switch device; and
the processing unit 830 may include (not shown in FIG. 8):
a first decapsulating subunit, configured to decapsulate the information reporting message, to obtain the IP address of the switch device and the port number of the ingress port that are included in the ARP request packet;
a first searching subunit, configured to search a saved address correspondence, to obtain a MAC address, which corresponds to the IP address of the switch device and the port number of the ingress port, of the switch device;
a first encapsulating subunit, configured to encapsulate an ARP response packet that is constructed according to the MAC address of the switch device, and a port number of an egress port of the ARP response packet in an information delivery message; and
a first delivering subunit, configured to send the information delivery message to the switch device, so that the switch device sends the ARP response packet from the egress port after decapsulating the information delivery message to obtain the ARP response packet and the port number of the egress port.

In another optional implementation manner,
the receiving unit 820 may be further configured to receive a first information reporting message sent by the switch device and used to request a MAC address of the external device, where the first information reporting message is a message sent by the switch device to the control device after the switch device receives an IP packet, and the first information reporting message is used to request a MAC address corresponding to an IP address included in the IP packet;
the processing unit 830 may be further configured to generate a first information delivery message according to the first information reporting message, where the first information delivery message carries an ARP request packet constructed by the control device and a port number of an egress port of the ARP request packet, and the ARP request packet includes the IP address;
the receiving unit 820 may be specifically configured to receive a second information reporting message that is sent by the switch device and includes an ARP response packet, where the second information reporting message is a message sent by the switch device to the control device according to the action set of the first flow entry that is obtained after the switch device matches the ARP response packet with the match item of the first flow entry, the ARP response packet and a port number of an ingress port receiving the ARP response packet on the switch device are encapsulated in the second information reporting message, the ARP response packet is a packet sent by the external device receiving the ARP request packet to the switch device after the external device determines that the IP address in the ARP request packet is the same as an IP address of the external device, and the ARP response packet includes a MAC address of the external device; and
the processing unit 830 may include (not shown in FIG. 8):
a second encapsulating subunit, configured to obtain a second information delivery message through encapsulation according to the second information reporting message, where the second information delivery message includes a correspondence between the IP address of the external device and the MAC address of the external device; and
a second delivering subunit, configured to send the second information delivery message to the switch device, so that the switch device obtains, according to the second information delivery message, a second flow entry used to forward an IP packet to the external device, where a match item of the second flow entry is that a packet type is IP packet and a destination IP address is the IP address of the external device, and an action set of the second flow entry is encapsulating the MAC address of the external device in an IP packet and forwarding the IP packet through the ingress port.

Refer to FIG. 9, which is a block diagram of another embodiment of a control device according to the present invention.

The control device includes: a network interface 910, a transceiver 920, and a processor 930, where
the network interface 910 is configured to connect to a switch device;
the transceiver 920 is configured to receive an information reporting message that is sent by the switch device and includes an ARP packet; and
the processor 930 is configured to send an information delivery message including a MAC address to the switch device according to the information reporting message by using the transceiver, so that the switch device implements the ARP according to the MAC address.

Optionally, the processor 930 may be further configured to deliver, to the switch device by using the transceiver 920, a first flow entry used to forward an ARP packet, where a match item of the first flow entry is that a packet type is ARP packet, and an action set of the first flow entry is forwarding an ARP packet to the control device.

In an optional implementation manner,
the transceiver 920 may be specifically configured to receive an information reporting message that is sent by the switch device and includes an ARP request packet, where the information reporting message is a message sent by the switch device to the control device according to the action set of the first flow entry that is obtained after the switch device matches the ARP request packet with the match item of the first flow entry, the ARP request packet and a port number of an ingress port receiving the ARP request packet on the switch device are encapsulated in the information reporting message, and the ARP request packet includes an IP address of the switch device; and
the processor 930 may be specifically configured to decapsulate the information reporting message, to obtain the IP address of the switch device and the port number of the ingress port that are included in the ARP request packet; search a saved address correspondence, to obtain a MAC address, which corresponds to the IP address of the switch device and the port number of the ingress port, of the switch device; encapsulate an ARP response packet that is constructed according to the MAC address of the switch device, and a port number of an egress port of the ARP response packet in an information delivery message; and send the information delivery message to the switch device by using the transceiver, so that the switch device sends the ARP response packet from the egress port after decapsulating the information delivery message to obtain the ARP response packet and the port number of the egress port.

In another optional implementation manner,
the transceiver 920 may be further configured to receive a first information reporting message sent by the switch device and used to request a MAC address of the external device, where the first information reporting message is a message sent by the switch device to the control device after the switch device receives an IP packet, and the first information reporting message is used to request a MAC address corresponding to an IP address included in the IP packet;
the processor 930 may be further configured to generate a first information delivery message according to the first information reporting message, where the first information delivery message carries an ARP request packet constructed by the control device and a port number of an egress port of the ARP request packet, and the ARP request packet includes the IP address;
the transceiver 920 may be specifically configured to receive a second information reporting message that is sent by the switch device and includes an ARP response packet, where the second information reporting message is a message sent by the switch device to the control device according to the action set of the first flow entry that is obtained after the switch device matches the ARP response packet with the match item of the first flow entry, the ARP response packet and a port number of an ingress port receiving the ARP response packet on the switch device are encapsulated in the second information reporting message, the ARP response packet is a packet sent by the external device receiving the ARP request packet to the switch device after the external device determines that the IP address in the ARP request packet is the same as an IP address of the external device, and the ARP response packet includes a MAC address of the external device; and
the processor 930 may be specifically configured to obtain a second information delivery message through encapsulation according to the second information reporting message, where the second information delivery message includes a correspondence between the IP address of the external device and the MAC address of the external device; and send the second information delivery message to the switch device by using the transceiver, so that the switch device obtains, according to the second information delivery message, a second flow entry used to forward an IP packet to the external device, where a match item of the second flow entry is that a packet type is IP packet and a destination IP address is the IP address of the external device, and an action set of the second flow entry is encapsulating the MAC address of the external device in an IP packet and forwarding the IP packet through the ingress port.

As can be seen from the foregoing embodiments, a switch device receives an ARP packet, and sends an information reporting message including the ARP packet to a control device; the control device sends an information delivery message including a MAC address to the switch device according to the information reporting message; the switch device implements the ARP according to the MAC address included in the information delivery message. By means of the embodiments of the present invention, although a switch device in an SDN network does not have a capability of supporting the ARP protocol, the switch device can report an ARP packet to a control device and implement ARP interaction with an external device with the assistance of the control device, thereby improving a data transmission capability of the SDN network.

A person skilled in the art may clearly understand that, the technologies in the embodiments of the present invention may be implemented by software in addition to a necessary general hardware platform. Based on such an understanding, the technical solutions of the present invention essentially or the part contributing to the prior art may be implemented in a form of a software product. The software product is stored in a storage medium, such as a ROM/RAM, a hard disk, or an optical disc, and includes several instructions for instructing a computer device (which may be a personal computer, a server, or a network device) to perform the methods described in the embodiments or some parts of the embodiments of the present invention.

The embodiments in this specification are all described in a progressive manner, for same or similar parts in the embodiments, reference may be made to these embodiments, and each embodiment focuses on a difference from other embodiments. Especially, a system embodiment is basically similar to a method embodiment, and therefore is described briefly; for related parts, reference may be made to partial descriptions in the method embodiment.

The foregoing descriptions are implementation manners of the present invention, but are not intended to limit the protection scope of the present invention. Any modification, equivalent replacement, and improvement made without departing from the spirit and principle of the present invention shall fall within the protection scope of the present invention.

## Claims

1. An Address Resolution Protocol ARP implementation method, wherein the method comprises:
receiving, by a switch device, an ARP packet;
sending, by the switch device, an information reporting message comprising the ARP packet to a control device; and
implementing, by the switch device, the ARP according to a MAC address comprised in an information delivery message sent by the control device, wherein the information delivery message is a message sent by the control device according to the information reporting message.

2. The method according to claim 1, wherein before the receiving, by a switch device, an ARP packet, the method further comprises:
receiving, by the switch device, a first flow entry delivered by the control device and used to forward an ARP packet, wherein a match item of the first flow entry is that a packet type is ARP packet, and an action set of the first flow entry is forwarding an ARP packet to the control device; and
saving, by the switch device, the first flow entry; and
the sending, by the switch device, an information reporting message comprising the ARP packet to a control device is specifically: sending, by the switch device, the information reporting message comprising the ARP packet to the control device according to the first flow entry.

3. The method according to claim 2, wherein
the receiving, by a switch device, an ARP packet is specifically:
receiving, by the switch device, an ARP request packet, wherein the ARP request packet comprises an Internet Protocol IP address of the switch device;
the sending, by the switch device, the information reporting message comprising the ARP packet to the control device according to the first flow entry comprises:
matching, by the switch device, a packet type of the ARP request packet with the match item of the first flow entry, to obtain the action set of the first flow entry;
encapsulating, by the switch device, the ARP request packet and a port number of an ingress port receiving the ARP request packet on the switch device in the information reporting message; and
forwarding, by the switch device, the information reporting message to the control device according to the action set; and
the implementing, by the switch device, the ARP according to a MAC address comprised in an information delivery message sent by the control device comprises:
receiving, by the switch device, the information delivery message sent by the control device;
decapsulating, by the switch device, the information delivery message, to obtain an ARP response packet constructed by the control device and a port number of an egress port of the ARP response packet, wherein the ARP response packet comprises a MAC address of the switch device, and the MAC address of the switch device is a MAC address that corresponds to the IP address of the switch device and the port number of the ingress port and is obtained by the control device after the control device searches a saved address correspondence; and
sending, by the switch device, the ARP response packet through the egress port.

4. The method according to claim 2, wherein before the receiving, by a switch device, an ARP packet, the method further comprises:
sending, by the switch device after receiving an IP packet, a first information reporting message to the control device, wherein the first information reporting message is used to request a MAC address corresponding to an IP address comprised in the IP packet;
receiving, by the switch device, a first information delivery message that is sent by the control device according to the first information reporting message, wherein the first information delivery message carries an ARP request packet constructed by the control device and a port number of an egress port of the ARP request packet, and the ARP request packet comprises the IP address; and
sending, by the switch device, the ARP request packet through the egress port; and
the receiving, by a switch device, an ARP packet is specifically: receiving, by the switch device, an ARP response packet, wherein the ARP response packet comprises the MAC address, and the ARP response packet is a packet sent by an external device receiving the ARP request packet to the switch device after the external device determines that the IP address in the ARP request packet is the same as an IP address of the external device.

5. The method according to claim 4, wherein
the sending, by the switch device, the information reporting message comprising the ARP packet to the control device according to the first flow entry comprises:
matching, by the switch device, a packet type of the ARP response packet with the match item of the first flow entry, to obtain the action set of the first flow entry;
encapsulating, by the switch device, the ARP response packet and a port number of an ingress port receiving the ARP response packet on the switch device in a second information reporting message; and
forwarding, by the switch device, the second information reporting message to the control device according to the action set; and
the implementing, by the switch device, the ARP according to a MAC address comprised in an information delivery message sent by the control device comprises:
receiving, by the switch device, a second information delivery message sent by the control device, wherein the second information delivery message comprises a correspondence between the IP address of the external device and a MAC address of the external device; and
obtaining, by the switch device according to the second information delivery message, a second flow entry used to forward an IP packet to the external device, wherein a match item of the second flow entry is that a packet type is IP packet and a destination IP address is the IP address of the external device, and an action set of the second flow entry is encapsulating the MAC address of the external device in an IP packet and forwarding the IP packet through the ingress port.

6. The method according to claim 4 or 5, wherein the egress port is all ports on the switch device; and
the sending, by the switch device, the ARP request packet through the egress port is specifically: sending, by the switch device, the ARP request packet through all the ports.

7. An ARP implementation method, wherein the method comprises:
receiving, by a control device, an information reporting message that is sent by a switch device and comprises an ARP packet; and
sending, by the control device, an information delivery message comprising a MAC address to the switch device according to the information reporting message, so that the switch device implements the ARP according to the MAC address.

8. The method according to claim 7, wherein before the receiving, by a control device, an information reporting message that is sent by a switch device and comprises an ARP packet, the method further comprises:
delivering, by the control device to the switch device, a first flow entry used to forward an ARP packet, wherein a match item of the first flow entry is that a packet type is ARP packet, and an action set of the first flow entry is forwarding an ARP packet to the control device.

9. The method according to claim 8, wherein
the receiving, by a control device, an information reporting message that is sent by a switch device and comprises an ARP packet is specifically:
receiving, by the control device, an information reporting message that is sent by the switch device and comprises an ARP request packet, wherein the information reporting message is a message sent by the switch device to the control device according to the action set of the first flow entry that is obtained after the switch device matches the ARP request packet with the match item of the first flow entry, the ARP request packet and a port number of an ingress port receiving the ARP request packet on the switch device are encapsulated in the information reporting message, and the ARP request packet comprises an IP address of the switch device; and
the sending, by the control device, an information delivery message comprising a MAC address to the switch device according to the information reporting message comprises:
decapsulating, by the control device, the information reporting message, to obtain the IP address of the switch device and the port number of the ingress port that are comprised in the ARP request packet;
searching, by the control device, a saved address correspondence, to obtain a MAC address, which corresponds to the IP address of the switch device and the port number of the ingress port, of the switch device;
encapsulating, by the control device, an ARP response packet that is constructed according to the MAC address of the switch device, and a port number of an egress port of the ARP response packet in the information delivery message; and
sending, by the control device, the information delivery message to the switch device, so that the switch device sends the ARP response packet through the egress port after decapsulating the information delivery message to obtain the ARP response packet and the port number of the egress port.

10. The method according to claim 8, wherein before the receiving, by a control device, an information reporting message that is sent by a switch device and comprises an ARP packet, the method further comprises:
receiving, by the control device, a first information reporting message sent by the switch device and used to request a MAC address of an external device, wherein the first information reporting message is a message sent by the switch device to the control device after the switch device receives an IP packet, and the first information reporting message is used to request a MAC address corresponding to an IP address comprised in the IP packet; and
generating, by the control device, a first information delivery message according to the first information reporting message, wherein the first information delivery message carries an ARP request packet constructed by the control device and a port number of an egress port of the ARP request packet, and the ARP request packet comprises the IP address; and
the receiving, by a control device, an information reporting message that is sent by a switch device and comprises an ARP packet is specifically:
receiving, by the control device, a second information reporting message that is sent by the switch device and comprises an ARP response packet, wherein the second information reporting message is a message sent by the switch device to the control device according to the action set of the first flow entry that is obtained after the switch device matches the ARP response packet with the match item of the first flow entry, the ARP response packet and a port number of an ingress port receiving the ARP response packet on the switch device are encapsulated in the second information reporting message, the ARP response packet is a packet sent by the external device receiving the ARP request packet to the switch device after the external device determines that the IP address in the ARP request packet is the same as an IP address of the external device, and the ARP response packet comprises the MAC address of the external device.

11. The method according to claim 10, wherein the sending, by the control device, an information delivery message comprising a MAC address to the switch device according to the information reporting message comprises:
obtaining, by the control device, a second information delivery message through encapsulation according to the second information reporting message, wherein the second information delivery message comprises a correspondence between the IP address of the external device and the MAC address of the external device; and
sending, by the control device, the second information delivery message to the switch device, so that the switch device obtains, according to the second information delivery message, a second flow entry used to forward an IP packet to the external device, wherein a match item of the second flow entry is that a packet type is IP packet and a destination IP address is the IP address of the external device, and an action set of the second flow entry is encapsulating the MAC address of the external device in an IP packet and forwarding the IP packet through the ingress port.

12. The method according to claim 10 or 11, wherein the egress port is all ports on the switch device, so that the switch device sends the ARP request packet through all the ports.

13. A switch device, wherein the switch device comprises:
a receiving unit, configured to receive an ARP packet;
a reporting unit, configured to send an information reporting message comprising the ARP packet received by the receiving unit to a control device; and
an implementing unit, configured to implement the ARP according to a MAC address comprised in an information delivery message sent by the control device, wherein the information delivery message is a message sent by the control device according to the information reporting message reported by the reporting unit.

14. The switch device according to claim 13, wherein
the receiving unit is further configured to receive a first flow entry delivered by the control device and used to forward an ARP packet, wherein a match item of the first flow entry is that a packet type is ARP packet, and an action set of the first flow entry is forwarding an ARP packet to the control device;
the switch device further comprises:
a saving unit, configured to save the first flow entry received by the receiving unit; and
the reporting unit is specifically configured to send the information reporting message comprising the ARP packet to the control device according to the first flow entry saved by the saving unit.

15. The switch device according to claim 14, wherein
the receiving unit is specifically configured to receive an ARP request packet, wherein the ARP request packet comprises an Internet Protocol IP address of the switch device;
the reporting unit comprises:
a first matching subunit, configured to match a packet type of the ARP request packet with the match item of the first flow entry, to obtain the action set of the first flow entry;
a first encapsulating subunit, configured to encapsulate the ARP request packet and a port number of an ingress port receiving the ARP request packet on the switch device in the information reporting message; and
a first forwarding subunit, configured to forward the information reporting message to the control device according to the action set; and
the implementing unit comprises:
a first receiving subunit, configured to receive the information delivery message sent by the control device;
a first decapsulating subunit, configured to decapsulate the information delivery message, to obtain an ARP response packet constructed by the control device and a port number of an egress port of the ARP response packet, wherein the ARP response packet comprises a MAC address of the switch device, and the MAC address of the switch device is a MAC address that corresponds to the IP address of the switch device and the port number of the ingress port and is obtained by the control device after the control device searches a saved address correspondence; and
a first sending subunit, configured to send the ARP response packet through the egress port.

16. The switch device according to claim 14, wherein
the reporting unit is further configured to send a first information reporting message to the control device after an IP packet is received, wherein the first information reporting message is used to request a MAC address corresponding to an IP address comprised in the IP packet;
the receiving unit is further configured to receive a first information delivery message that is sent by the control device according to the first information reporting message, wherein the first information delivery message carries an ARP request packet constructed by the control device and a port number of an egress port of the ARP request packet, and the ARP request packet comprises the IP address;
the reporting unit is further configured to send the ARP request packet through the egress port; and
the receiving unit is specifically configured to receive an ARP response packet, wherein the ARP response packet comprises the MAC address, and the ARP response packet is a packet sent by an external device receiving the ARP request packet to the switch device after the external device determines that the IP address in the ARP request packet is the same as an IP address of the external device.

17. The switch device according to claim 16, wherein
the reporting unit comprises:
a second matching subunit, configured to match a packet type of the ARP response packet with the match item of the first flow entry, to obtain the action set of the first flow entry;
a second encapsulating subunit, configured to encapsulate the ARP response packet and a port number of an ingress port receiving the ARP response packet on the switch device in a second information reporting message; and
a second forwarding subunit, configured to forward the second information reporting message to the control device according to the action set; and
the implementing unit comprises:
a second receiving subunit, configured to receive a second information delivery message sent by the control device, wherein the second information delivery message comprises a correspondence between the IP address of the external device and a MAC address of the external device; and
a second obtaining subunit, configured to obtain, according to the second information delivery message, a second flow entry used to forward an IP packet to the external device, wherein a match item of the second flow entry is that a packet type is IP packet and a destination IP address is the IP address of the external device, and an action set of the second flow entry is encapsulating the MAC address of the external device in an IP packet and forwarding the IP packet through the ingress port.

18. A control device, wherein the control device comprises:
a receiving unit, configured to receive an information reporting message that is sent by a switch device and comprises an ARP packet; and
a processing unit, configured to send an information delivery message comprising a MAC address to the switch device according to the information reporting message received by the receiving unit, so that the switch device implements the ARP according to the MAC address.

19. The control device according to claim 18, wherein the control device further comprises:
a delivering unit, configured to deliver, to the switch device, a first flow entry used to forward an ARP packet, wherein a match item of the first flow entry is that a packet type is ARP packet, and an action set of the first flow entry is forwarding an ARP packet to the control device.

20. The control device according to claim 19, wherein
the receiving unit is specifically configured to receive an information reporting message that is sent by the switch device and comprises an ARP request packet, wherein the information reporting message is a message sent by the switch device to the control device according to the action set of the first flow entry that is obtained after the switch device matches the ARP request packet with the match item of the first flow entry, the ARP request packet and a port number of an ingress port receiving the ARP request packet on the switch device are encapsulated in the information reporting message, and the ARP request packet comprises an IP address of the switch device; and
the processing unit comprises:
a first decapsulating subunit, configured to decapsulate the information reporting message, to obtain the IP address of the switch device and the port number of the ingress port that are comprised in the ARP request packet;
a first searching subunit, configured to search a saved address correspondence, to obtain a MAC address, which corresponds to the IP address of the switch device and the port number of the ingress port, of the switch device;
a first encapsulating subunit, configured to encapsulate an ARP response packet that is constructed according to the MAC address of the switch device, and a port number of an egress port of the ARP response packet in the information delivery message; and
a first delivering subunit, configured to send the information delivery message to the switch device, so that the switch device sends the ARP response packet from the egress port after decapsulating the information delivery message to obtain the ARP response packet and the port number of the egress port.

21. The control device according to claim 19, wherein
the receiving unit is further configured to receive a first information reporting message sent by the switch device and used to request a MAC address of the external device, wherein the first information reporting message is a message sent by the switch device to the control device after the switch device receives an IP packet, and the first information reporting message is used to request a MAC address corresponding to an IP address comprised in the IP packet;
the processing unit is further configured to generate a first information delivery message according to the first information reporting message, wherein the first information delivery message carries an ARP request packet constructed by the control device and a port number of an egress port of the ARP request packet, and the ARP request packet comprises the IP address; and
the receiving unit is specifically configured to receive a second information reporting message that is sent by the switch device and comprises an ARP response packet, wherein the second information reporting message is a message sent by the switch device to the control device according to the action set of the first flow entry that is obtained after the switch device matches the ARP response packet with the match item of the first flow entry, the ARP response packet and a port number of an ingress port receiving the ARP response packet on the switch device are encapsulated in the second information reporting message, the ARP response packet is a packet sent by the external device receiving the ARP request packet to the switch device after the external device determines that the IP address in the ARP request packet is the same as an IP address of the external device, and the ARP response packet comprises the MAC address of the external device.

22. The control device according to claim 21, wherein the processing unit comprises:
a second encapsulating subunit, configured to obtain a second information delivery message through encapsulation according to the second information reporting message, wherein the second information delivery message comprises a correspondence between the IP address of the external device and the MAC address of the external device; and
a second delivering subunit, configured to send the second information delivery message to the switch device, so that the switch device obtains, according to the second information delivery message, a second flow entry used to forward an IP packet to the external device, wherein a match item of the second flow entry is that a packet type is IP packet and a destination IP address is the IP address of the external device, and an action set of the second flow entry is encapsulating the MAC address of the external device in an IP packet and forwarding the IP packet through the ingress port.

23. A switch device, wherein the switch device comprises a network interface, a memory, a transceiver, and a processor, wherein
the network interface is configured to connect to a control device;
the memory is configured to save a flow entry;
the transceiver is configured to receive an ARP packet; and
the processor is configured to send an information reporting message comprising the ARP packet to the control device by using the transceiver, and implement the ARP according to a MAC address comprised in an information delivery message sent by the control device, wherein the information delivery message is a message sent by the control device according to the information reporting message.

24. The switch device according to claim 23, wherein
the transceiver is further configured to receive a first flow entry delivered by the control device and used to forward an ARP packet, wherein a match item of the first flow entry is that a packet type is ARP packet, and an action set of the first flow entry is forwarding an ARP packet to the control device;
the memory is specifically configured to save the first flow entry; and
the processor is specifically configured to send the information reporting message comprising the ARP packet to the control device according to the first flow entry by using the transceiver.

25. The switch device according to claim 24, wherein
the transceiver is specifically configured to receive an ARP request packet, wherein the ARP request packet comprises an Internet Protocol IP address of the switch device; and
the processor is specifically configured to match a packet type of the ARP request packet with the match item of the first flow entry, to obtain the action set of the first flow entry; encapsulate the ARP request packet and a port number of an ingress port receiving the ARP request packet on the switch device in the information reporting message; forward the information reporting message to the control device according to the action set; decapsulate the information delivery message sent by the control device and received by the transceiver, to obtain an ARP response packet constructed by the control device and a port number of an egress port of the ARP response packet, wherein the ARP response packet comprises a MAC address of the switch device, and the MAC address of the switch device is a MAC address that corresponds to the IP address of the switch device and the port number of the ingress port and is obtained by the control device after the control device searches a saved address correspondence; and send the ARP response packet through the egress port.

26. The switch device according to claim 24, wherein
the transceiver is further configured to send, after receiving an IP packet, a first information reporting message to the control device, wherein the first information reporting message is used to request a MAC address corresponding to an IP address comprised in the IP packet; and receive a first information delivery message that is sent by the control device according to the first information reporting message, wherein the first information delivery message carries an ARP request packet constructed by the control device and a port number of an egress port of the ARP request packet; and send the ARP request packet through the egress port, wherein the ARP request packet comprises the IP address; and
the transceiver is specifically configured to receive an ARP response packet, wherein the ARP response packet comprises the MAC address, and the ARP response packet is a packet sent by an external device receiving the ARP request packet to the switch device after the external device determines that the IP address in the ARP request packet is the same as an IP address of the external device.

27. The switch device according to claim 26, wherein
the processor is specifically configured to match a packet type of the ARP response packet with the match item of the first flow entry, to obtain the action set of the first flow entry; encapsulate the ARP response packet and a port number of an ingress port receiving the ARP response packet on the switch device in a second information reporting message; forward the second information reporting message to the control device according to the action set; receive, by using the transceiver, a second information delivery message sent by the control device, wherein the second information delivery message comprises a correspondence between the IP address of the external device and a MAC address of the external device; and obtain, according to the second information delivery message, a second flow entry used to forward an IP packet to the external device, wherein a match item of the second flow entry is that a packet type is IP packet and a destination IP address is the IP address of the external device, and an action set of the second flow entry is encapsulating the MAC address of the external device in an IP packet and forwarding the IP packet through the ingress port.

28. A control device, wherein the control device comprises a network interface, a transceiver, and a processor, wherein
the network interface is configured to connect to a switch device;
the transceiver is configured to receive an information reporting message that is sent by the switch device and comprises an ARP packet; and
the processor is configured to send an information delivery message comprising a MAC address to the switch device according to the information reporting message by using the transceiver, so that the switch device implements the ARP according to the MAC address.

29. The control device according to claim 28, wherein
the processor is further configured to deliver, to the switch device by using the transceiver, a first flow entry used to forward an ARP packet, wherein a match item of the first flow entry is that a packet type is ARP packet, and an action set of the first flow entry is forwarding an ARP packet to the control device.

30. The control device according to claim 29, wherein
the transceiver is specifically configured to receive an information reporting message that is sent by the switch device and comprises an ARP request packet, wherein the information reporting message is a message sent by the switch device to the control device according to the action set of the first flow entry that is obtained after the switch device matches the ARP request packet with the match item of the first flow entry, the ARP request packet and a port number of an ingress port receiving the ARP request packet on the switch device are encapsulated in the information reporting message, and the ARP request packet comprises an IP address of the switch device; and
the processor is specifically configured to decapsulate the information reporting message, to obtain the IP address of the switch device and the port number of the ingress port that are comprised in the ARP request packet; search a saved address correspondence, to obtain a MAC address, which corresponds to the IP address of the switch device and the port number of the ingress port, of the switch device; encapsulate an ARP response packet that is constructed according to the MAC address of the switch device, and a port number of an egress port of the ARP response packet in an information delivery message; and send the information delivery message to the switch device by using the transceiver, so that the switch device sends the ARP response packet from the egress port after decapsulating the information delivery message to obtain the ARP response packet and the port number of the egress port.

31. The control device according to claim 29, wherein
the transceiver is further configured to receive a first information reporting message sent by the switch device and used to request a MAC address of the external device, wherein the first information reporting message is a message sent by the switch device to the control device after the switch device receives an IP packet, and the first information reporting message is used to request a MAC address corresponding to an IP address comprised in the IP packet;
the processor is further configured to generate a first information delivery message according to the first information reporting message, wherein the first information delivery message carries an ARP request packet constructed by the control device and a port number of an egress port of the ARP request packet, and the ARP request packet comprises the IP address; and
the transceiver is specifically configured to receive a second information reporting message that is sent by the switch device and comprises an ARP response packet, wherein the second information reporting message is a message sent by the switch device to the control device according to the action set of the first flow entry that is obtained after the switch device matches the ARP response packet with the match item of the first flow entry, the ARP response packet and a port number of an ingress port receiving the ARP response packet on the switch device are encapsulated in the second information reporting message, the ARP response packet is a packet sent by the external device receiving the ARP request packet to the switch device after the external device determines that the IP address in the ARP request packet is the same as an IP address of the external device, and the ARP response packet comprises the MAC address of the external device.

32. The control device according to claim 31, wherein
the processor is specifically configured to obtain a second information delivery message through encapsulation according to the second information reporting message, wherein the second information delivery message comprises a correspondence between the IP address of the external device and the MAC address of the external device; and send the second information delivery message to the switch device by using the transceiver, so that the switch device obtains, according to the second information delivery message, a second flow entry used to forward an IP packet to the external device, wherein a match item of the second flow entry is that a packet type is IP packet and a destination IP address is the IP address of the external device, and an action set of the second flow entry is encapsulating the MAC address of the external device in an IP packet and forwarding the IP packet through the ingress port.
